# EUROPEAN PATENT SPECIFICATION

(11) **EP 1 652 558 B1**
(45) Date of publication and mention of the grant of the patent: **27.07.2011**
(21) Application number: 04292563.6
(22) Date of filing: 28.10.2004
(51) Int. Cl.: A63B 59/14, B29C 70/86, B29C 70/46

(54) **Method of making a formable hockey stick blade**
Verfahren zur Herstellung eines formbaren Hockeyschlägerblattes
Méthode de fabrication d'une palette de crosse de hockey formable

(43) Date of publication of application: 03.05.2006
(73) Proprietor: Bauer Hockey Corp., St-Jérôme, QC J7Y 5G2 (CA)
(72) Inventor: Bellefleur, Alain, St-Luc Québec J2W 2PA (CA); Fream, Win, Newfields NH 03856 (US); Miller, Robert M., Acton MA 01720 (US); Borbone, Vincent, Sandown NH 03873 (US)
(74) Representative: Burbaud, Eric

(56) References cited:
- WO-A-97/33660
- WO-A-03/097181
- GB-A- 2 134 845
- US-A- 5 152 856
- US-A- 6 062 996
- US-A1- 2003 153 415

## Description

### Field of the invention

The present invention relates to a method of making a formable hockey stick blade.

### Background of the invention

Typical hockey stick blades or replacement blades are generally made of a wooden core reinforced with one or more layers of synthetic material such as fiberglass, carbon fiber or graphite. The core of the blade may also be made of a synthetic material reinforced with layers of fibers material. The layers are usually made of woven filament fibers, typically soaked in a resin and glued to the surfaces of the core of the blade. Expandable fibers braids may also be used for recovering the core of the blade. U.S. Patent 6,062,996 discloses a sport implement comprising a blade structure having a core with an elongated insert and a peripheral frame. The blade structure is non-deformable at a first temperature and is formable at a second temperature that is greater that the first temperature and less than 121°C (250°F). International Patent Application WO97/336060 discloses a method of manufacturing a blade wherein the blade is manufactured in that a core material of thermoplastic is welded to a reinforcing fiber material of glass fiber.

There is a demand for a formable hockey stick blade that has a weight, stiffness and strength adapted for high-level hockey players and can be heated and shaped repeatedly to selected curvatures.

### Summary of the invention

As embodied and broadly described herein, the invention provides a method of making a formable hockey stick blade according to claim 1. Further embodiments are disclosed in the dependent claims.

### Brief description of the drawings

A detailed description of the embodiments of the present invention is provided herein below, by way of example only, with reference to the accompanying drawings, in which:
Figure 1 is a perspective view of first and second core portions used in the construction of a formable hockey stick blade according to the invention;
Figure 2 is a perspective view of the first and second core portions of Figure 1 with first and second fibers braids used in the construction of the blade;
Figure 3 is a perspective view of the first and second core portions and first and second fibers braids of Figure 2 with further third and fourth fibers braid used in the construction of the blade of Figure 1;
Figure 4 is a perspective view of the first and second core portions and the fibers braids of Figure 3 with a further fifth fibers braid used in the construction of the blade of Figure 1;
Figure 5 is a perspective view of the preformed blade before the molding operation;
Figure 6 is a cross-sectional view taken along lines 6-6;
Figure 7 is a perspective view of the preformed blade of Figure 6 and a mold;
Figure 8 is a perspective view of the formable hockey stick blade construed in accordance with the invention; and
Figure 9 is a cross-sectional view taken along lines 9-9.

In the drawings, the embodiments of the invention are illustrated by way of examples. It is to be expressly understood that the description and drawings are only for the purpose of illustration and are an aid for understanding. They are not intended to be a definition of the limits of the invention.

### Detailed description of the embodiments

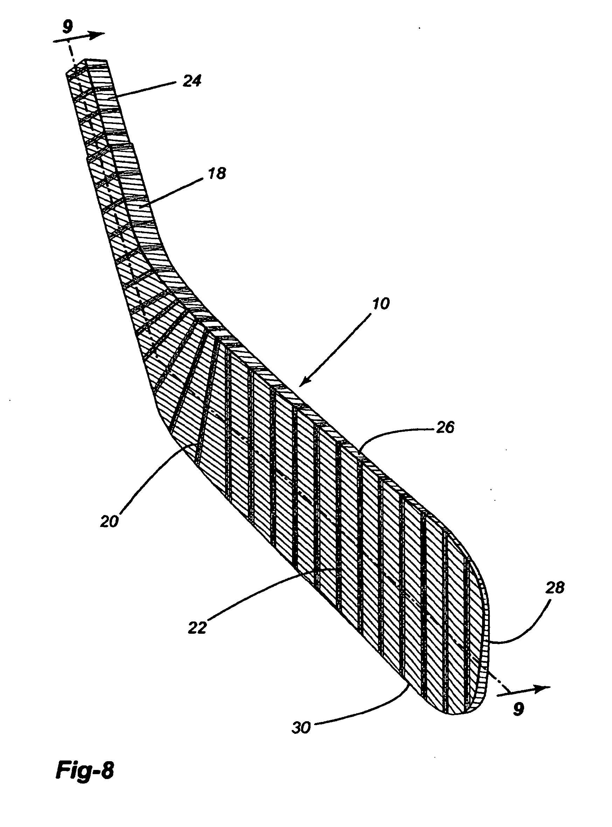

Figures 8 illustrate a formable hockey stick blade 10 constructed in accordance with the invention. As used herein, the word "formable" means that the blade 10 can be heated and softened for shaping it to a selected curvature. The blade 10 is formable when heated to a temperature exceeding the melting point of the thermoplastic material used for making the blade 10. In fact, the temperature must be sufficiently high in order to bring the thermoplastic material to its amorphous form. The temperature increment can range between 3.88°C (25°F) and 10°C (50°F) above the melting point temperature. The melting temperature of the thermoplastic-fibers matrix may be between 137.78°C (280°F) and 160°C (320°F). Moreover, since a thermoplastic material is used for making the blade 10, the blade 10 is also "reformable" i.e. it can be heated, softened and shaped a couple of times without suffering any substantial basic alteration in its properties.

The blade 10 comprises a shank 18, a heel section 20 and a blade element 22. The heel section 20 is located at the junction of the shank 18 and the blade element 22. The shank 18 comprises a tenon 24 adapted to be inserted into a hollow hockey stick shaft made of aluminum, composite or graphite. The blade element 22 comprises a top edge 26, a tip edge 28 and a bottom edge 30.

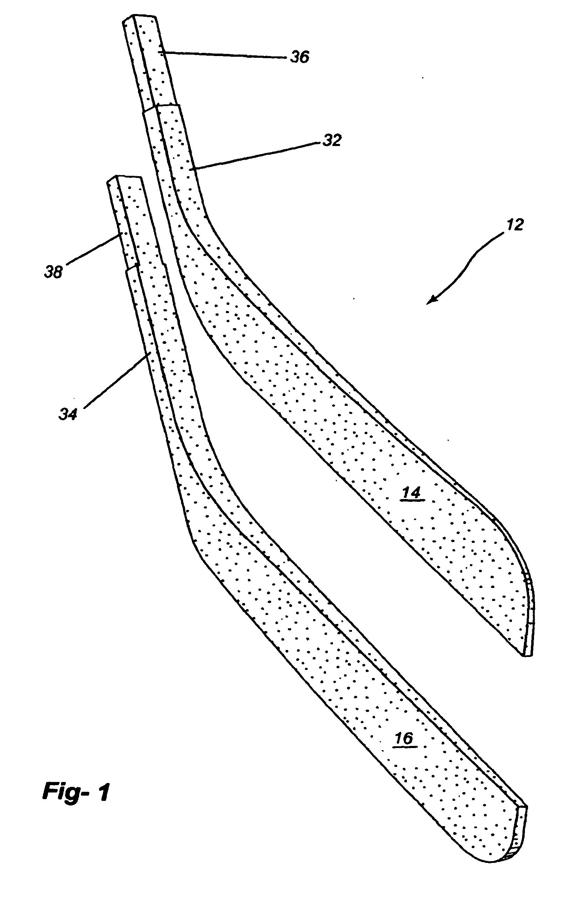

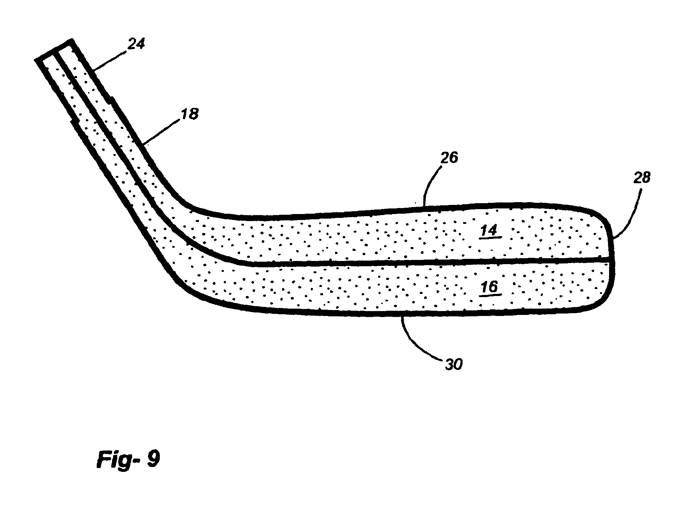

Referring to Figures 1 and 9, the blade 10 comprises a foam core 12 extending along a longitudinal axis A-A. The foam core 12 has the general shape of a hockey stick blade. The foam core 12 comprises a first portion 14 located above and aligned with a second portion 16. The first and second portions 14, 16 are dimensioned such as to have the shape of a blade when aligned with one another. The first and second portions 14, 16 are made of expandable foam. For example, the first and second portions 14, 16 may be made of a closed-cell polymethacrymilide foam sold by Rohacell under the number 200WF, this foam having a Poisson ratio of 0.33. The Poisson ratio is the ratio of lateral strain to the longitudinal strain for a given material subjected to a uniform longitudinal stress with a proportional limit. Other suitable foam will be the RC 51 WF, RC 71 WF, RC 110 WF, RC 300 WF, foams sold by Rohacell and having respective Poisson ratios of 0.34, 0.37, 0.37 and 0.38. The first and second portions 14, 16 may be made of a closed-cell polyetherimid foam sold under the name AIREX R82. The first and second portions 14, 16 may also be made of a styrene acrylo nitrile thermoplastic foam produced by ATC Chemical Corporation under the name CORE-CELL T and having a density of around 0.080 to 0.0897 g/cm³ (5.0 to 5.6 lbs/cubic foot).

The first and second portions 14, 16 form the blade element of the foam core 12 and may further comprise respective shank portions 32, 34 defining the core of the shank 18, these shank portions 32, 34 comprising respective tenon portions 36, 38. The shank portions 32, 34 generally extend upwardly and rearwardly from the heel section 20. Hence, the core 12 comprises the first portion 14 with its shank portion 32 and the second portion 16 with its shank portion 34.

It is understood that the core may comprise first and second portions that do not comprise respective first and second shank portions. In fact, the first and second portions of the core may be confined to the blade element of the hockey stick blade (from the heel section to the tip edge) and the shank may be a separate component that is joined to the blade element. For example, the shank may be made of wood and comprises a groove in which a tongue portion provided on the blade element is inserted for joining together both components.

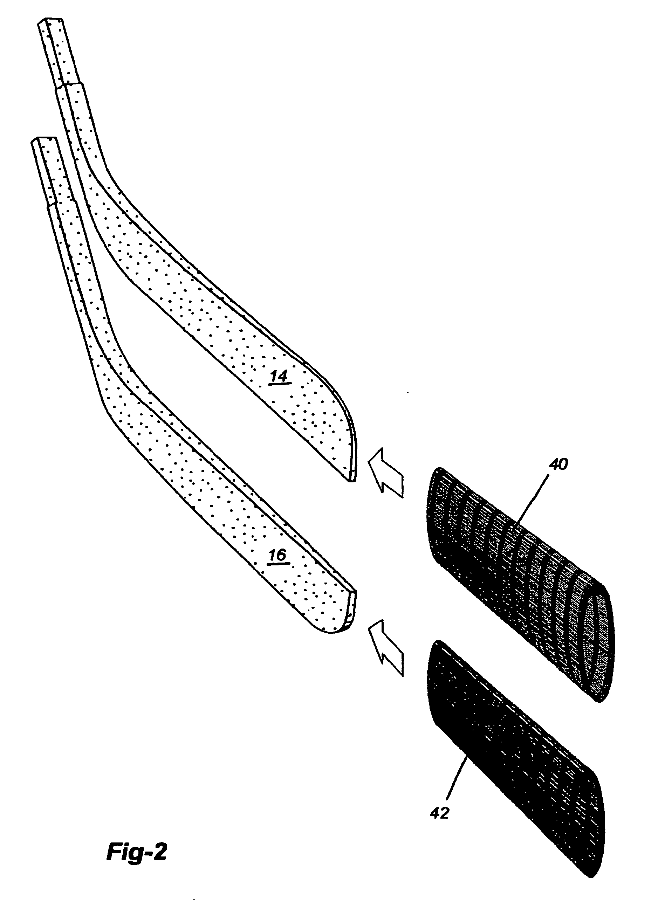

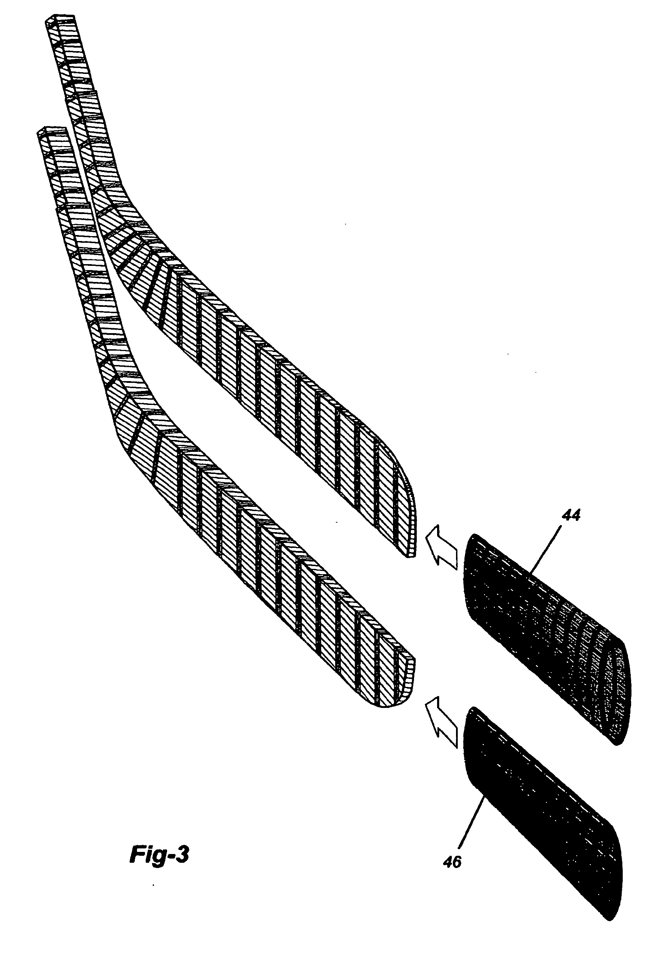

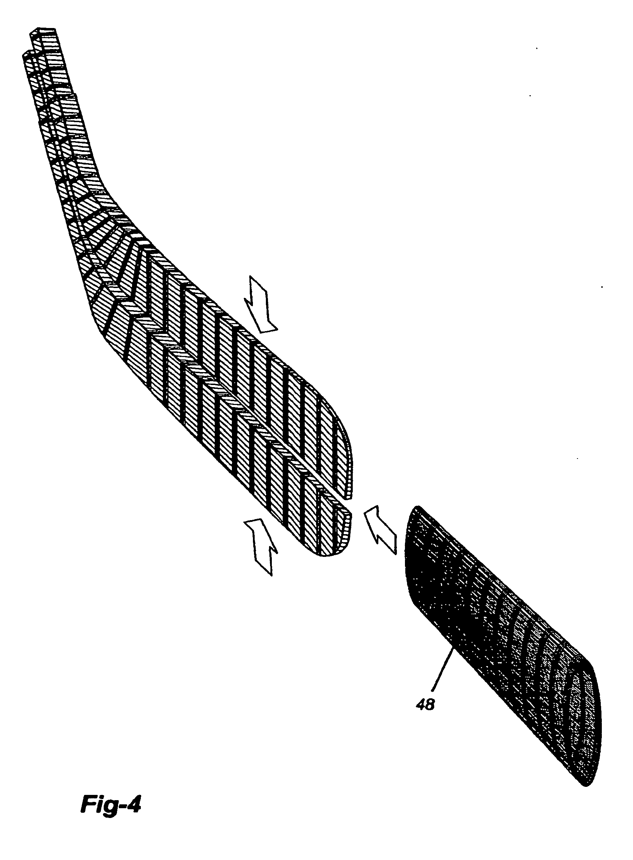

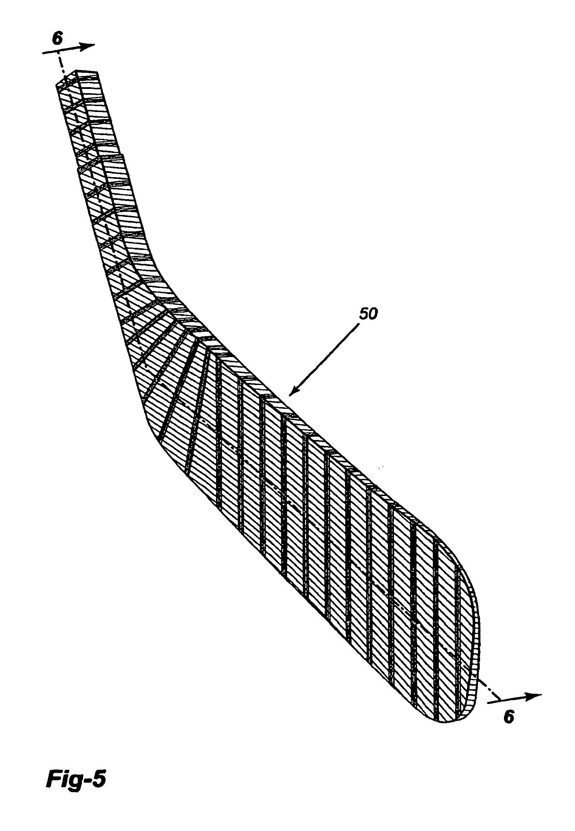

As shown in Figure 2, a first fiber braid 40 is wrapped over the first portion 14 and a second fiber braid 42 is wrapped over the second portion 16. As shown in Figure 3, third and fourth fiber braid 44, 46 are wrapped over the respective first and second fiber braids 40, 42 of the first and second portions 14, 16. As shown in Figure 4, a fifth fiber braid 48 is wrapped over the third and fourth fiber braids 44, 46 of the first and second portions 14, 16 such as to realize a preformed blade 50 as shown in Figure 5. Note that the preformed blade 50 comprises the foam core 12 and the fibers braids covering that foam core and is a "preformed" blade since it has to be placed in a mold in order to manufacture and form a formable blade such as the blade 10.

The fiber braids are expandable so as to conform to the shape of the first and second portions 14, 16 and are made of woven fibers selected from the group consisting of carbon fibers, glass fibers, KEVLAR fibers, ceramic fibers, boron fibers, quartz fibers, spectra fibers, polyester fibers and polyethylene fibers. The fibers are pre-impregnated with a thermoplastic material such as Nylon or polypropylene. Examples of suitable materials are the pre-impregnated fibers braid sold under the name HEXCEL TOWFLEX TF-CN6-100 (matrix of Nylon 6) and the pre-impregnated fibers braid sold under the name SCHAPPE TPFL-CARBON PA12 (matrix of Nylon 12). The fibers braids may be made of fibers crossing at 45°. However, any other fibers crossing at between 30° and 60° may be used. Unidirectional fiber braids may also be used. Note that the foam core 12 and the fibers braids should have similar processing temperatures. In other words, the melting point of the thermoplastic-fibers matrix should be similar to the melting point of the foam.

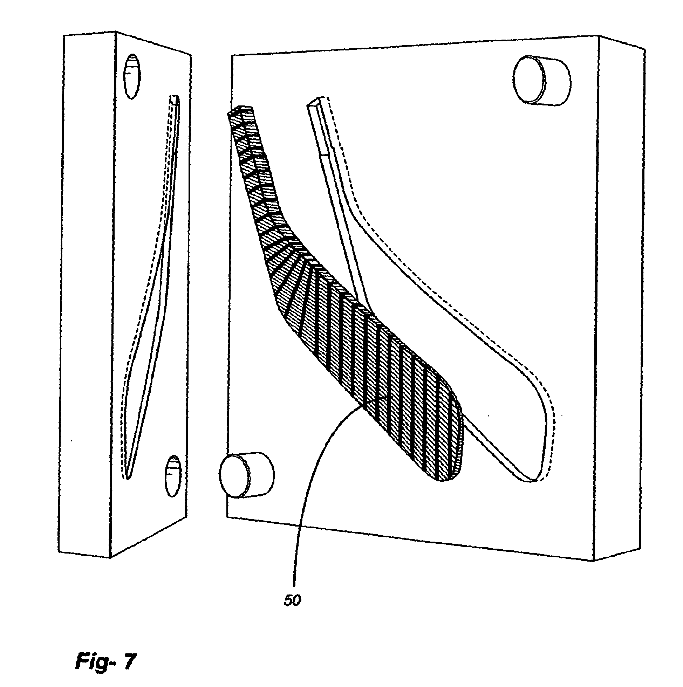

As shown in Figure 7, the preformed blade 50 is afterwards inserted in a mold in order to manufacture the formable blade 10. At that point, the mold may be at a temperature of about 215.56°C (420°F). It is understood that the mold may be heated before or after the introduction of the preformed blade 50 in the mold or it may remain at a steady temperature during the entire process. Heat is therefore applied to the mold in order to melt the thermoplastic-fibers matrix and soften the foam core 12 of the preformed blade 50. Pressure is also maintained on the mold in order to compress the blade during the process. It is understood that the pressure exerted on the mold must be sufficient to keep the male-female mold parts together, to crush the form core 12 and to sustain the internal pressure created by the foam when heated.

As previously indicated, the foam core 12 has the general shape of a hockey stick blade. However, the foam core has an initial thickness greater then its final thickness. For instance, the initial thickness of the foam core may be 1.5 to 10 times greater than the final thickness of the blade element 22 of the formable blade 10. Indeed, due to the Poisson ratio of at least 0.33, the foam core 12 may flow and conform to the internal cavity of the mold while applying pressure to the outer layers of pre-impregnated fibers in order to consolidate together the thermoplastic material and the fibers, which then form the thermoplastic-fibers matrix. The internal pressure created by the heated foam should also be sufficient to bond together the foam core and the thermoplastic-fibers matrix. The thickness of the foam core 12 may be then considerably reduced. For example, the thickness of the blade portions 14, 16 may be reduced of at least 10%, 20%, 30% or 75%. In fact, the foam core, more particularly the blade element of the foam core, is crushed during the process and its density may increase from 0.080 to 0.096g /cm³ (5 to 6 pound/cubic foot) to 0.104 to 0.320g/cm³ (6.5 to 20 pound/cubic foot) and its thickness may be reduced from 6 to 30 mm to 1 to 3 mm. For example, if the foam has an initial density of 0.080g/cm³ 5 pound/cubic foot) this foam will have a density of around 0.240g/cm³ 15 pound/cubic foot at the end if the initial thickness of the blade element of the foam core is three (3) times greater than its final thickness. The density of the crushed foam is therefore the density of the initial foam multiply with the initial thickness of the foam core divided with the thickness of the final foam core.

The mold remains at a temperate of at least 215°C (420°F) for at least 2 minutes in order to bring the thermoplastic material to its amorphous form. It is understood that a minimum temperature of about 190°C (375°F) may be used but the processing time would then be longer. When the fibers-thermoplastic matrix is set after cooling, the mold is opened and the formable blade 10 is removed from the mold. Note that the blade 10 has the general shape of a straight hockey stick blade. Excess material may be trimmed off.

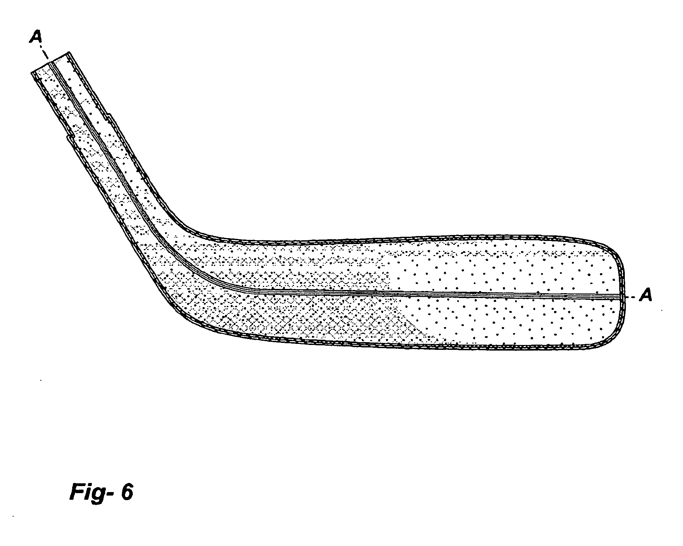

Figure 6 shows a cross section view of the preformed blade 50 for illustrating the fiber braids before the molding process. In fact, once the thermoplastic-fibers matrix is created after the molding process (see large lines on Figure 9), the formable blade 10 comprises an interface between the first and second portions 14, 16, this interface comprising fibers oriented transversely relative to the longitudinal axis A-A. The thermoplastic-fibers matrix of the edges 26, 28, 30 (see large lines on Figure 9) may also comprise fibers oriented transversely relative to the longitudinal axis A-A.

The blade 10 is a formable straight blade and it is therefore possible to supply this blade to stores that will then tailor the blade 10 by heating and applying pressure to shape it according to a curvature selected by a customer.

## Claims

1. A method of making a formable hockey stick blade (10), the method comprising:
(a) providing a core (12) comprising a first and a second blade portions (14, 16) with a thickness, the core being made of closed cell foam having a Poisson ratio of at least 0.33;
(b) forming a preformed stick blade (50) by wrapping the core (12) with a layer of fibers pre-impregnated with a thermoplastic material, the thermoplastic material and the foam core having similar processing temperature;
(c) placing the preformed stick blade in a mold;
(d) applying heat and pressure to the mold in order to melt the thermoplastic fibers matrix, soften the blade portions (14, 16) and compress the preformed stick blade such that the thickness of blade portions (14, 16) is reduced; and
(e) removing the formable stick blade (10) from the mold.

2. A method as defined in claim 1, wherein the thickness of the core (12) is reduced by at least 10%.

3. A method as defined in claim 2, wherein the thickness of the core (12) is reduced by at least 20%.

4. A method as defined in claim 3, wherein the thickness of the core (12) is reduced by at least 30%.

5. A method as defined in claim 4, wherein the thickness of the core (12) is reduced by at least 75%.

6. A method as defined in claim 1, wherein the initial thickness of the core (12) is between 6 mm and 20 mm and the final thickness of the core (12) is between 1 mm and 3 mm.

7. A method as defined in claim 6, wherein die temperature of the mold is maintained between 190°C (375°F) and 218°C (425°F) during step (d).

8. A method as defined in claim 7, wherein the temperature of the mold is maintained between 190°C (375°F) and 218°C (425°F) during at least 2 minutes.

9. A method as defined in claim 6, wherein the temperature of the mold is maintained between 190°C (375°F) and 218°C (425°F) during steps (c) to (e).

10. A method as defined in claim 6, wherein the thermoplastic material is made of Nylon or polypropylene.

11. A method as defined in claim 1, wherein the pressure exerted on the mold is sufficient to sustain the internal pressure created by the heated foam.

12. A method as defined in claim 11, wherein the internal pressure created by the heated foam is sufficient to consolidate together the fibers and the thermoplastic material.

13. A method as defined in claim 12, wherein the internal pressure created by the heated foam is sufficient to bond together the core and the consolidated fibers and thermoplastic material.

14. A method as defined in claim 13, wherein step (a) comprises cutting first and second blade portions (14, 16) such that the first blade portion (14) comprises a bottom surface following a longitudinal axis of the blade and the second blade portion (16) comprises a top surface following the longitudinal axis, the first and second blade portions (14, 16) forming the core once the first blade portion (14) is aligned with and placed over the second blade portion (16).

15. A method as defined in claim 14, wherein step (b) comprises wrapping the first blade portion (14) in a first fiber braid (40) and the second blade portion (16) in a second fiber braid (42), the first and second fibers braid comprising fibers selected from the group consisting of carbon fibers, glass fibers, KEVLAR fibers, ceramic fibers, boron fibers, quartz fibers, spectra fibers, polyester fibers and polyethylene fibers.

16. A method as defined in claim 15, wherein step (b) further comprises wrapping the first and second blade portions (14, 16) and first and second fiber braids (40, 42) in respective third and fourth fiber braids (44, 46) that comprise fibers selected from the group consisting of carbon fibers, glass fibers, KEVLAR fibers, ceramic fibers, boron fibers, quartz fibers, spectra fibers, polyester fibers and polyethylene fibers.

17. A method as defined in claim 16, wherein step (b) further comprises wrapping the first and second blade portions (14, 16) and first, second, third and fourth fiber braids (40, 42, 44, 46) in a fifth fiber braid (48) that comprises fibers selected from the group consisting of carbon fibers, glass fibers, KEVLAR fibers, ceramic fibers, boron fibers, quartz fibers, spectra fibers, polyester fibers and polyethylene fibers.

18. A method as defined in claim 17 further comprising trimming said formable hockey stick blade.

19. A method as defined in claim 1, wherein the initial density of the blade element of the foam core is between 0.080g/cm³ (5 pound/cubic foot and 0.096 g/cm³ pound/cubic foot) and the final density of the blade element of the foam core is between 0.104 g/cm³ (6.5 pounds/cubic foot) and 0.320 g/cm³ (20 pound/cubic foot).

## Patentansprüche

1. Verfahren zur Herstellung eines formbaren Hockeyschlägerblatts (10), wobei das Verfahren aufweist:
(a) Bereitstellen eines Kerns (12), der einen ersten und einen zweiten Blattabschnitt (14, 16) mit einer Dicke aufweist, wobei der Kern aus einem Schaumstoff mit geschlossenen Zellen mit einer Poissonzahl von wenigstens 0,33 gefertigt ist;
(b) Ausbilden eines vorgeformten Schlägerblatts (50), indem der Kern (12) mit einer Schicht aus Fasern umhüllt wird, die mit einem thermoplastischen Material vorimprägniert wurden, wobei das thermoplastische Material und der Schaumkern eine ähnliche Verarbeitungstemperatur haben;
(c) Anordnen des vorgeformten Schlägerblatts in einer Form;
(d) Anwenden von Wärme und Druck auf die Form, um die thermoplastische Fasermatrix zu schmelzen, die Blattabschnitte (14, 16) zu erweichen und das vorgeformte Schlägerblatt zu komprimieren, so dass die Dicke der Blattabschnitte (14, 16) verringert wird; und
(e) Entfernen des formbaren Schlägerblatts (10) aus der Form.

2. Verfahren nach Anspruch 1, wobei die Dicke des Kerns (12) um wenigstens 10% verringert wird.

3. Verfahren nach Anspruch 2, wobei die Dicke des Kerns (12) um wenigstens 20% verringert wird.

4. Verfahren nach Anspruch 3, wobei die Dicke des Kerns (12) um wenigstens 30% verringert wird.

5. Verfahren nach Anspruch 4, wobei die Dicke des Kerns (12) um wenigstens 75% verringert wird.

6. Verfahren nach Anspruch 1, wobei die Anfangsdicke des Kerns (12) zwischen 6 mm und 20 mm liegt, und die Enddicke des Kerns (12) zwischen 1 mm und 3 mm liegt.

7. Verfahren nach Anspruch 6, wobei die Temperatur der Form während des Schritts (d) zwischen 190°C (375°F) und 218°C (425°F) gehalten wird.

8. Verfahren nach Anspruch 7, wobei die Temperatur der Form wenigstens 2 Minuten lang zwischen 190°C (375°F) und 218°C (425°F) gehalten wird.

9. Verfahren nach Anspruch 6, wobei die Temperatur der Form während der Schritte (c) bis (e) zwischen 190°C (375°F) und 218°C (425°F) gehalten wird.

10. Verfahren nach Anspruch 6, wobei das thermoplastische Material aus Nylon oder Polypropylen gefertigt ist.

11. Verfahren nach Anspruch 1, wobei der auf die Form ausgeübte Druck ausreicht, um den von dem geheizten Schaum erzeugten Innendruck auszuhalten.

12. Verfahren nach Anspruch 11, wobei der von dem geheizten Schaum erzeugte Innendruck ausreicht, um die Fasern und das thermoplastische Material miteinander zu vereinigen.

13. Verfahren nach Anspruch 12, wobei der von dem geheizten Schaum erzeugte Innendruck ausreicht, um den Kern und die vereinigten Fasern und das thermoplastische Material miteinander zu verbinden.

14. Verfahren nach Anspruch 13, wobei der Schritt (a) das Schneiden erster und zweiter Blattabschnitte (14, 16) derart aufweist, dass der erste Blattabschnitt (14) eine untere Oberfläche aufweist, die einer Längsachse des Blatts folgt, und der zweite Blattabschnitt (16) eine obere Oberfläche aufweist, die der Längsachse folgt, wobei die ersten und zweiten Blattabschnitte (14, 16) den Kern bilden, wenn der erste Blattabschnitt (14) einmal mit dem zweiten Blattabschnitt (16) ausgerichtet und über diesem angeordnet ist.

15. Verfahren nach Anspruch 14, wobei der Schritt (b) das Einhüllen des ersten Blattabschnitts (14) in ein erstes Fasergeflecht (40) und des zweiten Blattabschnitts (16) in ein zweites Fasergeflecht (42) aufweist, wobei die ersten und zweiten Fasergeflechte Fasern aufweisen, die aus der Gruppe ausgewählt sind, die aus Karbonfasern, Glasfasern, KEVLAR-Fasern, Keramikfasern, Borfasern, Quarzfasern, Spectra-Fasern, Polyesterfasern und Polyethylenfasern besteht.

16. Verfahren nach Anspruch 15, wobei der Schritt (b) ferner das Einhüllen der ersten und zweiten Blattabschnitte (14, 16) und der ersten und zweiten Fasergeflechte (40, 42) in jeweilige dritte und vierte Fasergeflechte (44, 46) aufweist, welche Fasern aufweisen, die aus der Gruppe ausgewählt sind, die aus Karbonfasern, Glasfasern, KEVLAR-Fasern, Keramikfasern, Borfasern, Quarzfasern, Spectra-Fasern, Polyesterfasern und Polyethylenfasern besteht.

17. Verfahren nach Anspruch 16, wobei der Schritt (b) ferner das Einhüllen der ersten und zweiten Blattabschnitte (14, 16) und der ersten, zweiten, dritten und vierten Fasergeflechte (40, 42, 44, 46) in ein fünftes Fasergeflecht (48) aufweist, welches Fasern aufweist, die aus der Gruppe ausgewählt sind, die aus Karbonfasern, Glasfasern, KEVLAR-Fasern, Keramikfasern, Borfasern, Quarzfasern, Spectra-Fasern, Polyesterfasern und Polyethylenfasern besteht.

18. Verfahren nach Anspruch 17, das ferner das Zuschneiden des formbaren Hockeyschlagerblatts aufweist.

19. Verfahren nach Anspruch 1, wobei die Anfangsdichte des Blattelements des Schaumkerns zwischen 0,080 g/cm³ (5 Pfund pro Kubikfuß) und 0,096 g/cm³ (6 Pfund pro Kubikfuß) liegt, und die Enddichte des Blattelements des Schaumkerns zwischen 0,104 g/cm³ (6,5 Pfund pro Kubikfuß) und 0,320 g/cm³ (20 Pfund pro Kubikfuß) liegt.

## Revendications

1. Procédé de fabrication d'une palette de crosse de hockey formable (10), le procédé comprenant les étapes consistant à :
(a) fournir une âme (12) comprenant une première et une seconde portions de palette (14, 16) avec une épaisseur, l'âme étant constitué d'une mousse à alvéoles fermées ayant un rapport de Poisson d'au moins 0,33 ;
(b) former une palette de crosse préformée (50) en enveloppant l'âme (12) avec une couche de fibres préimprégnée avec un matériau thermoplastique, le matériau thermoplastique et l'âme en mousse ayant une température de traitement similaire ;
(c) placer la palette de crosse préformée dans un moule ;
(d) appliquer chaleur et pression au moule afin de faire fondre la matrice de fibres thermoplastiques, de ramollir les portions de palette (14, 16) et de comprimer la palette de crosse préformée de telle sorte que l'épaisseur des portions de palette (14, 16) est réduite ; et
(e) enlever la palette de crosse formable (10) du moule.

2. Procédé selon la revendication 1, dans lequel l'épaisseur de l'âme (12) est réduite d'au moins 10 %.

3. Procédé selon la revendication 2, dans lequel l'épaisseur de l'âme (12) est réduite d'au moins 20 %.

4. Procédé selon la revendication 3, dans lequel l'épaisseur de l'âme (12) est réduite d'au moins 30 %.

5. Procédé selon la revendication 4, dans lequel l'épaisseur de l'âme (12) est réduite d'au moins 75 %.

6. Procédé selon la revendication 1, dans lequel l'épaisseur initiale de l'âme (12) est comprise entre 6 mm et 20 mm et l'épaisseur finale de l'âme (12) est comprise entre 1 mm et 3 mm.

7. Procédé selon la revendication 6, dans lequel la température du moule est maintenue entre 190 °C (375 °F) et 218 °C (425 °F) pendant l'étape (d).

8. Procédé selon la revendication 7, dans lequel la température du moule est maintenue entre 190 °C (375 °F) et 218 °C (425 °F) pendant au moins 2 minutes.

9. Procédé selon la revendication 6, dans lequel la température du moule est maintenue entre 190 °C (375 °F) et 218 °C (425 °F) pendant les étapes (c) à (e).

10. Procédé selon la revendication 6, dans lequel le matériau thermoplastique est constitué de Nylon ou polypropylène.

11. Procédé selon la revendication 1, dans lequel la pression exercée sur le moule est suffisante pour soutenir la pression interne créée par la mousse chauffée.

12. Procédé selon la revendication 11, dans lequel la pression interne créée par la mousse chauffée est suffisante pour consolider ensemble les fibres et le matériau thermoplastique.

13. Procédé selon la revendication 12, dans lequel la pression interne créée par la mousse chauffée est suffisante pour lier ensemble l'âme et les fibres et le matériau thermoplastique consolidés.

14. Procédé selon la revendication 13, dans lequel l'étape (a) comprend la découpe des première et seconde portions de palette (14, 16) de telle sorte que la première portion de palette (14) comprenne une surface inférieure suivant un axe longitudinal de la palette et la seconde portion de palette (16) comprend une surface supérieure suivant l'axe longitudinal, les première et seconde portions de palette (14, 16) formant l'âme une fois que la première portion de palette (14) est alignée avec et placée sur la seconde portion de palette (16).

15. Procédé selon la revendication 14, dans lequel l'étape (b) comprend l'enveloppement de la première portion de palette (14) dans une première tresse de fibres (40) et la seconde portion de palette (16) dans une deuxième tresse de fibres (42), les première et deuxième tresses de fibres comprenant des fibres choisies dans le groupe consistant en les fibres de carbone, les fibres de verre, les fibres de KEVLAR, les fibres céramiques, les fibres de bore, les fibres de quartz, les fibres Spectra, les fibres de polyester et les fibres de polyéthylène.

16. Procédé selon la revendication 15, dans lequel l'étape (b) comprend en outre l'enveloppement des première et seconde portions de palette (14, 16) et des première et deuxième tresses de fibres (40, 42) dans des troisième et quatrième tresses de fibres (44, 46) respectives qui comprennent des fibres choisies dans le groupe consistant en les fibres de carbone, les fibres de verre, les fibres de KEVLAR, les fibres céramiques, les fibres de bore, les fibres de quartz, les fibres Spectra, les fibres de polyester et les fibres de polyéthylène.

17. Procédé selon la revendication 16, dans lequel l'étape (b) comprend en outre l'enveloppement des première et seconde portions de palette (14, 16) et de première, deuxième, troisième et quatrième tresses de fibres (40, 42, 44, 46) dans une cinquième tresse de fibres (48) qui comprend des fibres choisies dans le groupe consistant en les fibres de carbone, les fibres de verre, les fibres KEVLAR, les fibres céramiques, les fibres de bore, les fibres de quartz, les fibres Spectra, les fibres de polyester et les fibres de polyéthylène.

18. Procédé selon la revendication 17, comprenant en outre le fait de tailler ladite palette de crosse de hockey formable.

19. Procédé selon la revendication 1, dans lequel la densité initiale de l'élément de palette de l'âme de mousse est comprise entre 0,080 g/cm³ (5 livres/pied cube) et 0,096 g/cm³ (6 livres/pied cube) et la densité finale de l'élément de palette de l'âme de mousse est comprise entre 0,104 g/cm³ (6,5 livres/pied cube) et 0,320 g/cm³ (20 livres/pied cube).
